# EUROPÄISCHE PATENTSCHRIFT

(11) **EP 0 824 441 B1**
(45) Veröffentlichungstag und Bekanntmachung des Hinweises auf die Patenterteilung: **24.10.2001**
(21) Anmeldenummer: 97905118.2
(22) Anmeldetag: 28.02.1997
(51) Int. Cl.: B62D 53/08, F16D 69/02

(54) **SATTELKUPPLUNG**
SEMI-TRAILER COUPLING
SELLETTE D'ATTELAGE

(30) Priorität: 09.03.1996 DE 19609314
(43) Veröffentlichungstag der Anmeldung: 25.02.1998
(73) Patentinhaber: Rütgers Automotive Aktiengesellschaft, 45356 Essen (DE)
(72) Erfinder: BAUMEISTER, Bernhard, D-32791 Lage (DE); THEOPOLD, Kurt, D-32657 Lemgo (DE); BUGAJ, Richard, D-46244 Bottrop (DE); GÜNTHER, Peter, D-58091 Hagen (DE)
(74) Vertreter: Hosbach, Hans Ulrich, Dipl.-Ing.
(86) Internationale Anmeldenummer: EP9700974
(87) Internationale Veröffentlichungsnummer: WO9732772

(56) Entgegenhaltungen:
- EP-A- 0 051 113
- EP-A- 0 248 980
- EP-A- 0 487 320
- CH-A- 674 635
- FR-A- 2 208 487
- GB-A- 2 003 088
- MENDE/SIMON: 'PHYSIK - GLEICHUNGEN UND TABELLEN', 1976, WILHELM HEYNE VERLAG, MÜNCHEN, DE siehe Seite 74

## Beschreibung

Die Erfindung betrifft eine Sattelkupplung mit einer Kupplungsplatte, einem Drehgelenk und einem vorzugsweise mehrteiligen Gleitsegmentbelag, der drehfest an der Kupplungsplatte angeordnet ist und eine nach oben gewandte Gleitfläche als Auflagefläche für einen Sattelauflieger bildet.

Herkömmliche Sattelkupplungen, wie sie z. B. in CH 674 635 A5 beschrieben sind, sind überwiegend mit Gleitsegmenten aus Stahl ausgestattet, deren Gleitfläche mit Fett geschmiert werden muß, um die gewünschten Reibwerte zu erreichen und Geräuschbelästigungen bei Gleitreibung von zwei hoch belasteten Stahlflächen zu vermeiden. Ein weiterer Nachteil dieser herkömmlichen Sattelkupplungsausführung liegt in der temperaturabhängigen Viskosität des das Gleitmittel bildenden Fetts. Bei extrem tiefen Temperaturen, so beispielsweise bei Einsatz in arktischen Gebieten, verliert das Fett seine Schmiereigenschaften; bei Einsatz in heißen Zonen reißt der Fettfilm rasch ab und tropft auf den Fahrbahnbelag. Letzteres stellt eine hohe und schwer tolerierbare Umweltbelastung dar.

Man hat daher versucht, Gleitsegmente für Sattelkupplungen aus speziellen Kunststoffmischungen herzustellen, die auch ohne Schmierung für ein gleichbleibendes Gleitverhalten zwischen Auflieger und Kupplungsplatte sorgen sollen. Die Belastbarkeit und Standfestigkeit derartiger schmierungsfreier Gleitsegmente konnten bisher nicht vollständig befriedigen.

Der Erfindung liegt die Aufgabe zugrunde, Sattelkupplungen mit schmierungsfreien Gleitsegmenten zur Verfügung zu stellen, deren Gleiteigenschaften praktisch temperaturunabhängig sind und die einen hohen Benutzungskomfort und eine hohe Lebensdauer ermöglichen.

Gelöst wird diese Aufgabe durch eine Sattelkupplung mit den Merkmalen des Patentanspruchs 1, des Patentanspruchs 2, des Patentanspruchs 4 oder des Patentanspruchs 5. Bei einer Sattelkupplung der eingangs genannten Art besteht erfindungsgemäß der Gleitsegmentbelag aus einem Reibmaterial (d. h. ein Reibbelagsmaterial), wobei an der Gleitfläche des Gleitsegmentbelags ein Reibwert im Bereich von 0,1 bis 0,2 eingestellt ist.

Überraschenderweise hat sich gezeigt, daß der relativ hohe Reibwert von 0,1 bis 0,2 von bearbeiteten Reibmaterialflächen ein optimales Gleitverhalten des Aufliegers auf der Gleitfläche gewährleistet. Die Reibung ist groß genug, um ein Schlingern und damit kritische Fahrsituationen des Sattelaufliegers zu vermeiden. Die mechanische Festigkeit des Reibmaterials ist bei Bremsbelägen vielfach getestet und erprobt. Das Reibmaterial ist selbst bei extrem niedrigen Temperaturen von -50°C und auch bei extrem hohen Temperaturen von beispielsweise 300°C unverändert, und sein Reibwert bleibt im wesentlichen konstant. Ein wesentlicher Vorteil des erfindungsgemäß verwendeten Reibmaterials liegt in dessen Kompatibilität mit fettbehafteten Gegenflächen an der Unterseite des Sattelaufliegers. Dies ist eine ökonomische Forderung von Speditionsunternehmen, deren Fuhrpark noch viele Jahre eine gemischte Benutzung von Sattelaufliegern an Sattelzugmaschinen herkömmlicher und neuer Ausführung erforderlich macht.

Bei einer bevorzugten Ausführungsform der Erfindung ist der Gleitsegmentbelag aus einer Formmasse geformt, die enthält:
30-45 % Bindemittel
35-55 % Textil- und/oder Glas- und/oder Mineralfasern und/oder -schnitzeln
5-14 % Verarbeitungshilfsmittel
0-8 % Reibungsänderungsmittel.

Besonders bewährt hat sich eine Formmasse, die
30-45 % Bindemittel
5-10 % Härter
30-40 % Textilschnitzel
5-15 % Textilfäden
0-8 % PTFE
1-4 % Schwarzpigmente
enthält.

Als Bindemittel eignet sich Phenolnovolak, wobei als Härter Hexamethylentetramin vorgesehen sein kann.

Die nach der vorstehenden Rezeptur hergestellte Formmasse wird im Trockenverfahren in der Schmelze beispielsweise mit Hilfe eines Schneckenkneters gemischt und anschließend gemahlen. Das entstehende Material wird in die gewünschte Gleitsegmentform gepreßt und zumindest im Bereich der Gleitfläche oberflächenbearbeitet. Nach Montage des fertigen Gleitsegments auf der Sattelplatte entsteht eine Sattelkupplung,
die ein bisher unerreicht konstantes Reib- bzw. Gleitverhalten zu den am Auflieger gebildeten Gegenflächen entfaltet und praktisch korrosionsfest ist.

Bei einer anderen Ausführungsform der Erfindung findet eine Reibmasse mit der folgenden Rezeptur Verwendung:
15-30 % Bindemittel
10-30 % Fasermaterial, insbesondere Textil- und/oder Glasfasern
10-25 % Füllstoffe
20-60 % Reibungsänderungsmittel.

Die zuvor beschriebene Reibmasse wird in der bei Bremsbelägen bekannten Weise (DE-PS 28 32 464) vorgeformt und einem Warmpressvorgang unter Temperatur-, Druck- und Zeitbedingungen ausgesetzt. Eine Oberflächen-Nachbearbeitung zur Glättung der Gleitfläche beendet die Herstellung des Gleitsegments. Zu der genauen Zusammensetzung der Reibmasse wird ebenfalls auf die DE-PS 28 32 464 verwiesen, die insoweit in die vorliegende Beschreibung einbezogen wird.

Eine weitere alternative Ausführungsform ist durch einen Sinterwerkstoff als Reibmaterial gekennzeichnet. Der Sinterwerkstoff besteht aus Eisen und/oder Nichteisenmetallen und/oder Kohlenstoff und/oder Phosphor und/oder Schwefel und/oder deren Legierungen und/oder deren Verbindungen in einer Menge von mindestens 50 Vol. % und einem oder mehreren Schmier/Gleitmitteln. Die Sintermasse kann zusätzlich mit einem oder mehreren Schmier/Gleitmitteln imprägniert werden.

In der Zeichnung ist schematisch ein Ausführungsbeispiel einer Sattelkupplung gezeigt, in der die Erfindung realisiert werden kann. In der Zeichnung zeigt:
Fig. 1 ein Ausführungsbeispiel der Sattelkupplung in der Einbaulage zwischen einer angedeuteten Sattelzugmaschine und einem ebenfalls angedeuteten Sattelauflieger; und
Fig. 2 eine Draufsicht auf die Sattelkupplung gemäß Fig. 1.

Die als ganze mit 1 bezeichnete Sattelkupplung ruht auf einem Sattelplattenlager 2, das auf einem Podest der Sattelzugmaschine 3 angeordnet ist.

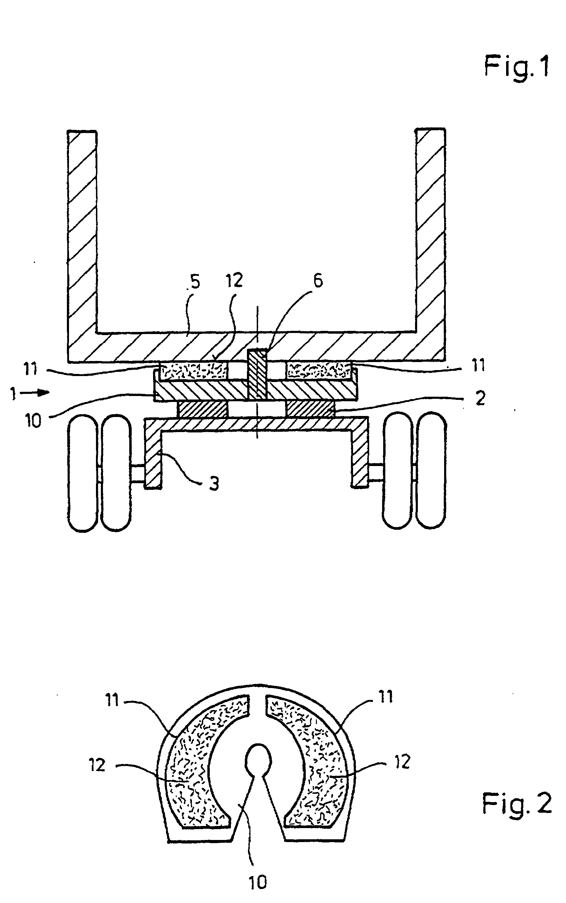

Das Drehgelenk zwischen Sattelkupplung 1 und Sattelauflieger 5 besteht aus einem Königszapfen 6. Die üblichen Verriegelungselemente, insbesondere die übliche Fallensicherung und die zugehörigen Handbetätigungselemente sind in der Figur 1 nicht gezeigt.

Die Sattelkupplung weist eine von dem Sattelplattenlager 2 abestützte Sattelplatte 10 aus Stahl und Gleit- bzw. Reibbelagsegmente 11 auf, die erfindungsgemäß aus einem Reibmaterial bestehenden . Die Reibbelagsegmente 11 sind an ihren nach oben gewandten Gleitflächen 12 bearbeitet und haben dort einen Reibwert im Bereich von 0,1 bis 0,2, der für ein komfortables Gleitverhalten mit der an der Unterseite des Sattelaufliegers gebildeten Gegenfläche sorgt. Dadurch ist ein weitgehend schlingerfreies und geräuscharmes Gleiten der Gleitflächen 12 an den aufliegenden Gegenflächen gewährleistet.

Die erfindungsgemäß aus Reibmaterial bestehenden Gleitsegmente haben ähnliche Vorteile auch bei artverwandten Anwendungen, so zum Beispiel bei Fahrgestellen von Schwerlastfahrzeugen, Drehgestellen von Eisenbahnen und allen sonstigen Drehgestellen, bei denen eine relativ hohe Drehdämpfung erwünscht ist.

## Patentansprüche

1. Sattelkupplung mit einer Kupplungsplatte (10), einem Drehgelenk (6) und einem vorzugsweise mehrteiligen Gleitsegmentbelag (11), der drehfest an der Kupplungsplatte angeordnet ist und eine nach oben gewandte Gleitfläche (12) als Auflagefläche für einen Sattelauflieger (5) bildet,
**dadurch gekennzeichnet,**
**daß** der Gleitsegmentbelag (11) aus einem Reibmaterial besteht, an dessen Gleitfläche (12) ein Reibwert im Bereich von 0,1 bis 0,2 eingestellt ist, und daß der Gleitsegmentbelag aus einer Formmasse geformt ist, die enthält
30-45 % Bindemittel
35-55 % Textil- und/oder Mineral- und/oder Glasfasern und/oder -schnitzel
5-14 % Verarbeitungshilfsmittel
0-8 % Reibungsänderungsmittel.

2. Sattelkupplung mit einer Kupplungsplatte (10), einem Drehgelenk (6) und einem vorzugsweise mehrteiligen Gleitsegmentbelag (11), der drehfest an der Kupplungsplatte angeordnet ist und eine nach oben gewandte Gleitfläche (12) als Auflagefläche für einen Sattelauflieger (5) bildet,
**dadurch gekennzeichnet,**
**daß** der Gleitsegmentbelag (11) aus einem Reibmaterial besteht, an dessen Gleitfläche (12) ein Reibwert im Bereich von 0,1 bis 0,2 eingestellt ist, und daß der Gleitsegmentbelag aus einer Formmasse geformt ist, die enthält:
30-45 % Bindemittel
35-40 % Textilschnitzel
5-15 % Textilfäden
5-10 % Härter
5-14 % Verarbeitungshilfsmittel
0- 8 % Reibänderungsmittel, z.B. PTFE,
und
1- 4 % Schwarzpigmente.

3. Sattelkupplung nach Anspruch 2, **dadurch gekennzeichnet, daß** das Bindemittel aus Phenolnovolack und der Härter aus Hexamethylentetramin besteht.

4. Sattelkupplung mit einer Kupplungsplatte (10), einem Drehgelenk (6) und einem vorzugsweise mehrteiligen Gleitsegmentbelag (11), der drehfest an der Kupplungsplatte angeordnet ist und eine nach oben gewandte Gleitfläche (12) als Auflagefläche für einen Sattelauflieger (5) bildet,
**dadurch gekennzeichnet,**
**daß** der Gleitsegmentbelag (11) aus einem Reibmaterial besteht, an dessen Gleitfläche (12) ein Reibwert im Bereich von 0,1 bis 0,2 eingestellt ist, und
**daß** das Reibmaterial enthält:
15-30 % Bindemittel
10-30 % Fasern
10-25 % Füllstoffe
20-60 % Reibungsänderungsmittel.

5. Sattelkupplung mit einer Kupplungsplatte (10), einem Drehgelenk (6) und einem vorzugsweise mehrteiligen Gleitsegmentbelag (11), der drehfest an der Kupplungsplatte angeordnet ist und eine nach oben gewandte Gleitfläche (12) als Auflagefläche für einen Sattelauflieger (5) bildet,
**dadurch gekennzeichnet,**
**daß** der Gleitsegmentbelag (11) aus einem Reibmaterial besteht, an dessen Gleitfläche (12) ein Reibwert im Bereich von 0,1 bis 0,2 eingestellt ist, und
**daß** als Reibmaterial ein Sinterwerkstoff, bestehend aus Eisen und/oder Nichteisenmetallen und/oder Kohlenstoff und/oder Phosphor und/oder Schwefel und/oder deren Legierungen und/oder deren Verbindungen in einer Menge von mindestens 50 Vol.-% und einem oder mehreren Schmier/Gleitmitteln eingesetzt wird.

## Claims

1. Semi-trailer coupling including a coupling plate (10), a rotary joint (6) and a preferably multi-part sliding segment lining (11), which is rotationally fixedly arranged on the coupling plate and affords an upwardly directed sliding surface (12) constituting an abutment surface for a semi-trailer (5),
**characterised in that** the sliding segment lining (11) comprises a frictional surface, on whose sliding surface (12) a coefficient of friction is set in the range of 0.1 to 0.2 and that the sliding segment lining is formed from a moulding composition which contains:
30-45% bonding agent
30-55% textile and/or mineral and/or glass fibres and/or chips
5-14% processing adjuvent
0-8% friction modifying agent.

2. Semi-trailer coupling including a coupling plate (10), a rotary joint (6) and a preferably multi-part sliding segment lining (11), which is rotationally fixedly arranged on the coupling plate and affords an upwardly directed sliding surface (12) constituted in an engagement surface for a semi-trailer (5), **characterised in that** the sliding segment lining (11) comprises a frictional material, on whose surface (12) a coefficient of friction is set in the range of 0.1-0.2 and that the sliding segment lining is formed from a moulding composition, which contains:
30-45% bonding agent
35-40% textile chippings
5-15% textile threads
5-10% setting agent
5-14% processing adjuvent
0-8% friction modifying agent, e.g. PTFE, and
1-4% black pigment:

3. Semi-trailer coupling as claimed in claim 2, **characterised in that** the bonding agent comprises phenol novolak and the setting agent comprises hexamethylene tetramine.

4. Semi-trailer coupling including a coupling plate (10), a rotary joint (6) and a preferably multi-part sliding segment lining (11), which is rotationally fixedly arranged on the coupling plate and affords an upwardly directed sliding surface (12) constituting an abutment surface for a semi-trailer (5), **characterised in that** the sliding segment lining (11) comprises a frictional material, on whose sliding surface (12) a coefficient of friction is set in the range of 0.1-0.2 and that the frictional material contains:
15-30% bonding agent
10-30% fibres
10-25% fillers
20-60% friction modifying agent.

5. Semi-trailer coupling including a couple plate (10), a rotary joint (6) and a preferably multi-part sliding segment lining (11), which is rotationally fixedly arranged on the coupling plate and affords an upwardly directed sliding surface (12) constituting an abutment surface for a semi-trailer (5), **characterised in that** the sliding segment lining (11) comprises a frictional material on whose surface a coefficient of the friction is set in the range of 0.1-0.2 and that a sintered material is used as the frictional material comprising iron and/or non-ferrous metals and/or carbon and/or phosphorous and/or sulphur and/or alloys thereof and/or compounds thereof in an amount of at least 50 vol.% and one or more lubricant/sliding agents.

## Revendications

1. Attelage à sellette comprenant une plaque d'attelage (10), une articulation de pivotement (6) et une garniture à segments de glissement de préférence en plusieurs parties (11) qui est montée fixe en rotation sur la plaque d'attelage et forme une surface de glissement dirigée vers le haut (12) comme surface d'appui pour une semi-remorque (5),
**caractérisé par le fait**
**que** la garniture à segments de glissement (11) est constituée d'une matière de frottement sur la surface de glissement (12) de laquelle est établi un coefficient de frottement de 0,1 à 0,2, et que la garniture à segments de glissement est formée à partir d'une matière à mouler qui contient:
30 à 45 % de liant
35 à 55 % de fibres et/ou de rognures textiles et/ou minérales et/ou de verre
5 à 14 % d'adjuvant de mise en oeuvre
0 à 8 % d'agent de modification de frottement.

2. Attelage à sellette comprenant une plaque d'attelage (10), une articulation de pivotement (6) et une garniture à segments de glissement de préférence en plusieurs parties (11) qui est montée fixe en rotation sur la plaque d'attelage et forme une surface de glissement dirigée vers le haut (12) comme surface d'appui pour une semi-remorque (5),
**caractérisé par le fait**
**que** la garniture à segments de glissement (11) est constituée d'une matière de frottement sur la surface de glissement (12) de laquelle est établi un coefficient de frottement de 0,1 à 0,2, et que la garniture à segments de glissement est formée à partir d'une matière à mouler qui contient :
30 à 45 % de liant
35 à 40 % de rognures textiles
5 à 15 % de fils textiles
5 à 10 % de durcisseur
5 à 14 % d'adjuvant de mise en oeuvre
0 à 8 % d'agent de modification de frottement, par exemple de PTFE, et
1 à 4 % de pigments noirs.

3. Attelage à sellette selon la revendication 2, **caractérisé par le fait que** le liant est constitué de phénol-novolaque et le durcisseur, d'hexaméthylènetétramine.

4. Attelage à sellette comprenant une plaque d'attelage (10), une articulation de pivotement (6) et une garniture à segments de glissement de préférence en plusieurs parties (11) qui est montée fixe en rotation sur la plaque d'attelage et forme une surface de glissement dirigée vers le haut (12) comme surface d'appui pour une semi-remorque (5),
**caractérisé par le fait**
**que** la garniture à segments de glissement (11) est constituée d'une matière de frottement sur la surface de glissement (12) de laquelle est établi un coefficient de frottement de 0,1 à 0,2, et
**que** la matière de frottement contient
15 à 30% de liant
10 à 30 % de fibres
10 à 25 % de matières de charge
20 à 60 % d'agent de modification de frottement.

5. Attelage à sellette comprenant une plaque d'attelage (10), une articulation de pivotement (6) et une garniture à segments de glissement de préférence en plusieurs parties (11) qui est montée fixe en rotation sur la plaque d'attelage et forme une surface de glissement dirigée vers le haut (12) comme surface d'appui pour une semi-remorque (5),
**caractérisé par le fait**
**que** la garniture à segments de glissement (11) est constituée d'une matière de frottement sur la surface de glissement (12) de laquelle est établi un coefficient de frottement de 0,1 à 0,2, et
**que** comme matière de frottement est employé un matériau fritté constitué de fer et/ou de métaux non ferreux et/ou de carbone et/ou de phosphore et/ou de soufre et/ou d'alliages de ceux-ci et/ou de composés de ceux-ci en une quantité d'au moins 50 % en volume, et d'un ou de plusieurs lubrifiants/agents de démoulage.
